# EUROPÄISCHE PATENTSCHRIFT

(11) **EP 0 699 474 B1**
(45) Veröffentlichungstag und Bekanntmachung des Hinweises auf die Patenterteilung: **12.04.2000**
(21) Anmeldenummer: 95113839.5
(22) Anmeldetag: 04.09.1995
(51) Int. Cl.: B01J 19/32, B01J 35/04, B01D 39/12, B01J 19/30

(54) **Flächenartiges Formteil als Füll- oder Trägerkörper für Katalysatoren, Kondensatkörper, Filter od.dgl.**
Sheet-like preform for use as catalyst filling or carrier body, condensation element, filter or the like
Pièce usinée analogue à une feuille utilisée comme élément de remplissage ou support de catalyseur, élément de condensation, filtre ou similaires

(30) Priorität: 05.09.1994 AT 169294
(43) Veröffentlichungstag der Anmeldung: 06.03.1996
(73) Patentinhaber: EFKON- Entwicklung Forschung & Konstruktion von Sondermaschinen Ges.m.b.H., 8045 Graz (AT)
(72) Erfinder: Stuhlbacher, Franz, 8053 Graz (AT); Rieder, Helmut, Dr., 8020 Graz (AT)
(74) Vertreter: Gödl, Oswald

(56) Entgegenhaltungen:
- EP-A- 0 263 598
- DE-A- 2 226 662
- DE-A- 4 219 673
- GB-A- 526 609
- GB-A- 607 283
- US-A- 2 493 726
- US-A- 3 218 048
- US-A- 4 562 015

## Beschreibung

Die Erfindung betrifft ein flächenartiges Formteil als Füll- oder Trägerkörper für Katalysatoren, Kondensatkörper, Filter od. dgl., mit einer Vielzahl von aus Stegen gebildeten durchgehend wabenförmigen Formkörper, erstellt durch Dehnung einer versetzt Schnittstellen aufweisenden Folienbahn, mit einer Vielzahl von Stegen quer zur Längsachse, die in einer vorgebbaren Querschnittsfläche, z.B. in einen von einem Medium durchströmten Rohrteil einlegbar ist, wobei das Formteil quer oder längs zur Längsachse zu mehreren Lagen zylindrisch oder oval oder ähnlich aufgerollt, oder als ebene Lagen schichtweise sowohl in Längs-, als auch in Querrichtung zu einer Einheit gebildet, verdichtet angeordnet ist und die Stege in beliebigen Winkeln und/oder Ebenen zur Strömungsrichtung liegen, und die einzelnen Lagen unter Vorspannung befestigt sind.

Es ist bekannt, solche flächenartige oder gerollte Formteile durch Stanzen oder Prägen herzustellen, wobei vorwiegend oszillierende Maschinenteile eingesetzt werden und kein kontinuierlicher Ablauf der Formbildung gegeben ist.

Nach DE-A-2 226 662 ist ein Verfahren zur Herstellung von Katalysatoren für die Abgasentgiftung aus Verbrennungskraftmaschinen bekannt, das unter anderem zur Herstellung der Katalysatstruktur dünne Metallfolien verwendet, das durch Schlitzen und Aufziehen zu einem Streckmaterial gebildet wird. Mit Hilfe eines sägenartigen Messers, das in gleichen Abständen schrittweise auf die Folienbahn gedrückt wird, werden die Schlitze und zugleich die Längsdehnung erstellt. Eine wirtschaftliche Herstellung des Streckmaterials ist nach diesem Verfahren nicht möglich.

Auch nach US-A-2 493 726 ist die Erstellung von Filtern bekannt, wobei Streckmaterial in mehreren Lagen in einen Rahmen gelegt als Filterpatrone od. dgl., gebildet wird. Diese Art von Filter ist nur für geringe Durchlaßgeschwindigkeiten des gasförmigen Mediums geeignet, da keine Vorspannung des Streckmaterials möglich ist.

Weiters ist nach US-A-4 562 015 für Gas- oder Flüßigkeitsreiniger ein Streckmaterial als Füllstoff beschrieben, wobei dieses wellenförmig ausgebildet ist und besonderer Wert auf einen bestimmten Anströmwinkel gelegt wird, womit sich die Herstellung verteuert.

Ferner ist nach GB-A-607 283 ein Packungsmaterial angeführt, das aus flachem Ausgangsmaterial besteht, welches durch Stanzen erstellt ist und in mehreren Lagen mit versetzten Öffnungen als Filterkörper Verwendung findet. Eine Vorspannung ist aber wegen der unregelmäßigen Enden nicht möglich und daher nur für Medien geringer Durchlaufgeschwindigkeit geeignet.

Schließlich ist aus US-A-3 218 048 ein Füllkörper zu entnehmen, der aus gewebeartigen Matten besteht, die gerollt in rohrartigen Hohlkörpern als Füllstoff dienen. Auch dieser Füllstoff ist lose in den Hohlraum gelegt und dient nur zu Reinigungszwecken des Durchlaufmediums Nachteilig ist, daß bei verschiedenen Anwendungsbereichen jeweils eigene Füllkörper erforderlich sind. So ist beispielsweise bei der katalytischen Reinigung von Abgasen und bei anderen katalytischen Prozessen ein Katalysatorträgerkörper aus Keramik oder abwechselnden Lagen von glatten und gerollten Blechen - gewickelt oder geschichtet - erforderlich. Dadurch ergibt sich eine zurückzulegende Wegstrecke für das Abgas, die starr und geradlinig vorgegeben ist. Das Resultat ist, daß großvolumige Körper erforderlich sind. Die sich zeitweilig aufbauenden Gasrückstaudrücke können sich nicht in der vorgegebenen Wegstrecke abbauen. Unerwünschte, erhebliche Druckverluste können hierbei auftreten.

Ausgehend von diesem Stand der Technik lag der Erfindung die Aufgabe zugrunde, ein Formteil als Füll- oder Trägerkörper für das obengenannte Anwendungsgebiet zu schaffen, das durch kontinuierlichen Herstellungsverlauf einfacher herstellbar und auch für große Durchlaufgeschwindigkeiten und verschiedenartige Strömungen des Mediums geeignet ist. Erfindungsgemäß wird das Ziel dadurch erreicht, daß die Ränder die gleiche Längenreduzierung, gebildet durch die Zahnhöhe der Fördereinrichtung, aufweisen, die der Längenänderung durch Streckung der Folienbahn zum Formteil entspricht.

Dadurch wird erreicht, daß durch die Ausbildung der Ränder über die gesamte Fläche des Streckmaterials ein Spannungszustand erzielt wird, der eine stabile Ebenflächigkeit bewirkt. Somit ist ein Einformen oder Rollen in jeglicher Richtung leicht möglich. Außerdem wird erreicht, daß das Strömungsmedium über eine größere katalytische Oberfläche verfügt, da sowohl laminare, als auch turbulente Strömungen innerhalb des Körpers auftreten. Darüberhinaus ist die Tatsache anzumerken, daß die Herstellung kontinuierlich als Laufmeterware in großen Mengen möglich ist.

Es ist von Vorteil, wenn die Stege einen sechseckig, wabenförmigen Hohlraum umschließen und die Spitze der derart gebildeten Wabe in Längsrichtung weisend das Formteil um diese Achse gerollt ist. Dadurch kann man auch geringe Durchmesser wählen, ohne Knickstellen beim Einrollvorgang befürchten zu müssen.

Auch ist von Vorteil, wenn das Formteil quer zur Längsachse gerollt ist, und gegebenenfalls zu einem mehrlagigen Gebilde gleicher oder verschiedener Rollrichtung kombiniert ist. Damit ist gewährleistet, daß die katalytische Umwandlung verbessert wird.

Weiters ist von Vorteil, wenn kleinere Einheiten von Formteilen in Rahmen befestigt und diese austauschbar sind. Hierbei wird eine wechselweise Laufrichtung der Folienbahn ermöglicht und eine gute Vorspannung erzielt.

Vorteilhaft ist auch, wenn größere Einheiten mit benachbarten Formteilen durch schweißen, löten, kleben oder klemmen der äußeren seitlichen Stege verbunden sind und eine kontinuierliche Einheit bilden. So können auch großvolumige Geräte befüllt werden.

Ferner ist von Vorteil, wenn das Formteil nach dem Einrollvorgang in Stücke gekappt, zylindrisch eingerollt, an den Enden verdrillt bzw. umgeschlagen, zu zylindrischen Formkörper gewälzt, als Füllkörper dienen. Damit können weitere Anwendungsgebiete, wie Füllkörper für Treibstofftanks od. dgl., erschlossen werden. Der wesentliche Vorteil ist darin zu sehen, daß die Kohlenwasserstoffe oder dergleichen flüchtige Gase im Tank der natürlichen Verflüchtigung bis zu 60 % entzogen werden.

Die Verringerung der Algenbildung in Tanks, insbesondere bei Verwendung von Diesel-oder Biokraftstoffen ist somit gegeben.

Anhand eines Ausführungsbeispiels sei die Erfindung näher erläutert. Es zeigen:
- Fig. 1: eine einlagige gestreckte Folienbahn
- Fig. 2: mehrlagige Folienbahn.

In Fig. list in Draufsicht eine gestreckte Folienbahn als Formteil 1 dargestellt, welches laufend von einer Rolle als Wickelgut entnommen wurde. In gewissen Abständen sind in Folienlaufrichtung quer versetzt perforationsartige Schnittstellen in bekannter Weise durch Schneidräder eingebracht. In diesem Fertigungsabschnitt ist die Folienbahn noch ein zweidimensionaler, ebener Körper. Die Schnittstellen werden nun seitlich, also quer zur Folienlaufrichtung, gedehnt, so daß sich sechseckige Öffnungen 3 bilden, die durch Stege 2 begrenzt sind und Folienbahn verbunden bleibt. Die sechseckigen Öffnungen 3 sind so ausgelegt, daß die Spitze 4 in Längsrichtung A weist. Die seitlichen Stege 2 stellen sich bei der Streckung auf, so daß nun ein dreidimensionaler Körper als Formteil 1 gebildet ist. Die Ränder 5 sind wellenartig geformt, je nachdem als Vortrieb Zahnriemen oder Ketten verwendet werden. Wesentlich ist, daß die Ränder 5 die gleiche Längenreduzierung durch die Zahnhöhe der Fördereinrichtung erfahren, die der Längenänderung durch die Streckung der Folienbahn entspricht. Bei kleineren Einheiten kann das Formteil 1 in Rahmen, bei größeren Einheiten hingegen durch schweißen, löten, kleben oder klemmen der seitlichen Stege 2a verbunden sein.

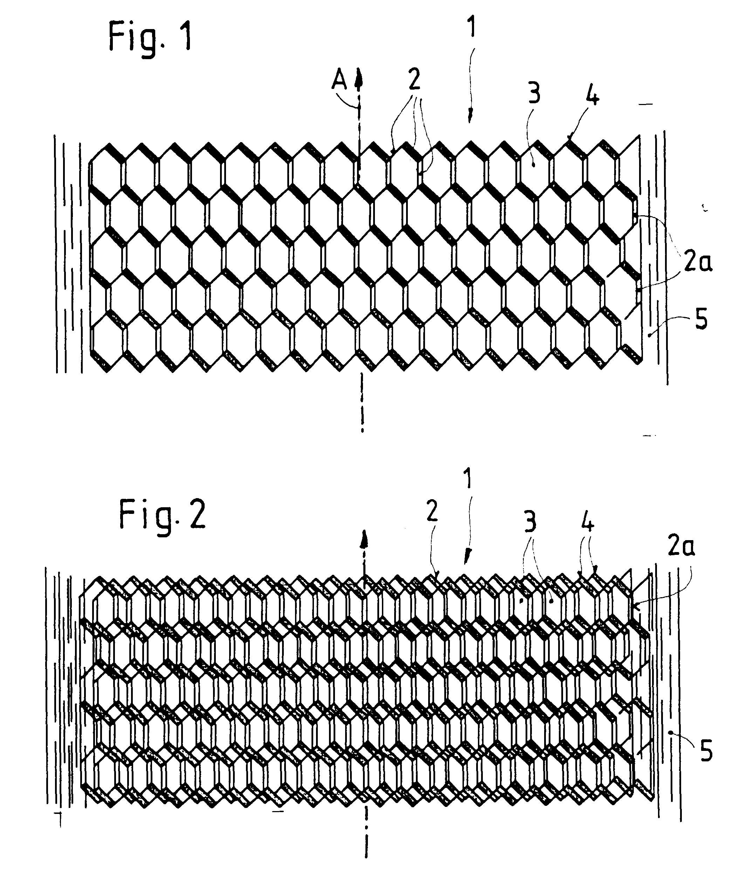

Ausgehend von diesem Formteil 1 besteht je nach Verwendungszweck die Möglichkeit, dieses um die Längsrichtung A einzurollen, aber auch quer dazu. Anwendungsgebiete finden sich auch, wenn wie in Fig. 2 aufgeführt, das Formteil 1 mehrlagig mit versetzten Öffnungen 3 zu einer Einheit zusammengefaßt sind. Hierbei ist es möglich das Formteil 1 mit um die Längsrichtung A oder quer dazu als weitere Lage zu verwenden.

Wesentlich ist, daß das Formteil 1, das auch wie erwähnt, mehrlagig sein kann, in gewissen Abständen in Längsrichtung A quer oder in einem beliebigen Winkel verdreht, übereinandergelagert sein kann. Die perforationsartigen Schnittstellen sind versetzt durch übereinandergreifende Schneidräder erstellt und diese Schnittstellen über eine besondere Streckvorrichtung ohne Mittelsteg in Breite gedehnt, (es entstehen wabenförmige Öffnungen) und hernach in Längen geschnitten. Es ist aber auch möglich, das Formteil 1 einzurollen, gegebenenfalls mehrlagig, in Stücken zu kappen, zylindrisch einzurollen und an den Enden zu verdrillen bzw. umzuschlagen und zu zylinderförmigen Formkörpern kontinuierlich zu wälzen. Zur optimalen Stabilitätserhaltung erfolgt das Einrollen unter einer gewissen Vorspannung. Weiters ist auch möglich, verschiedene formen, je nach Anwendungsbereich, z.B. oval, rund, elliptisch oder andere Mischformen herzustellen.

Durch dieses kontinuierliche Produktionsverfahren wird erreicht, daß die Herstellung wirtschaftlich in großen Mengen möglich ist. Dies ist insofern wichtig, da solche Formteile in so großer Vielzahl einsetzbar sind und der Bedarf sehr groß ist.

## Patentansprüche

1. Flächenartiges Formteil als Füll- oder Trägerkörper für Katalysatoren, Kondensatkörper, Filter od. dgl., mit einer Vielzahl von aus Stegen gebildeten durchgehend wabenförmigen Formkörper erstellt durch Dehnung einer versetzt perforationsartig Schnittstellen aufweisenden Folienbahn quer zur Längsachse, die in einer vorgebbaren Querschnittsfläche, z.B. in einen von einem Medium durchströmten Rohrteil einlegbar ist, wobei das Formteil quer oder längs zur Längsachse zu mehreren Lagen zylindrisch oder oval oder ähnlich aufgerollt, oder als ebene Lagen schichtweise sowohl in Längs-, als auch in Querrichtung zu einer Einheit gebildet, verdichtet angeordnet ist und die Stege in beliebigen Winkeln und/oder Ebenen zur Strömungsrichtung liegen, und die einzelnen Lagen unter Vorspannung befestigt sind, **dadurch gekennzeichnet,** daß die Ränder (5) die gleiche Längenreduzierung, gebildet durch die Zahnhöhe der Fördereinrichtung, aufweisen, die der Längenänderung durch die Streckung der Folienbahn zum Formteil (1) entspricht.

2. Flächenartiges Formteil nach Anspruch 1, **dadurch gekennzeichnet,** daß die Stege (2) einen sechseckig, wabenförmigen Hohlraum (3) umschließen und die Spitze (4) der derart gebildeten Wabe in Längsrichtung (A) weisend das Formteil (1) um diese Achse gerollt ist.

3. Flächenartiges Formteil nach Anspruch 1 und 2, **dadurch gekennzeichnet,** daß das Formteil (1) quer zur Längsrichtung (A) gerollt ist und gegebenenfalls zu einem mehrlagigen Gebilde gleicher oder verschiedener Rollrichtung kombiniert ist.

4. Flächenartiges Formteil nach Anspruch 1 bis 3, **dadurch gekennzeichnet,** daß kleinere Einheiten von Formteilen (1) in Rahmen befestigt und diese austauschbar sind.

5. Flächenartiges Formteil nach Anspruch 1 bis 3, **dadurch gekennzeichnet,** daß größere Einheiten mit benachbarten Formteilen (1) durch schweißen, löten, kleben oder klemmen der äußeren seitlichen Stege (2a) verbunden sind und eine kontinuierliche Einheit bilden.

6. Flächenartiges Formteil nach Anspruch 1 und 2, **dadurch gekennzeichnet,** daß das Formteil (1) nach dem Einrollvorgang in Stücke gekappt, zylindrisch eingerollt, an den Enden verdrillt bzw. umgeschlagen, zu zylindrischen Formkörper gewälzt, als Füllkörper dienen.

## Claims

1. A sheet-like pre-form as a filling or carrier body for catalysts, condensation-product bodies, filters or the like, comprising a plurality of continuously honeycomb-shaped bodies formed from webs and produced by the extension of a sheet of film - provided with cuts offset and in the manner of perforations - transversely to the longitudinal axis, which can be inserted into an allowable cross-sectional face for example into a tube member traversed by a medium, wherein the pre-form is arranged rolled up into a plurality of layers in a cylindrical or oval manner or the like transversely or longitudinally with respect to the longitudinal axis, or compressed as flat layers in a laminated manner in both the longitudinal and the transverse direction so as to form a unit, and the webs are orientated at any desired angles and/or in any desired planes to the flow direction, and the individual layers are secured with pre-stressing, **characterized in that** the edges (5) have the same longitudinal reduction, formed by the tooth height of the conveying device, which corresponds to the change in length by the stretching of the sheet of film to form the pre-form (1).

2. A sheet-like pre-form according to Claim 1, **characterized in that** the webs (2) surround an hexagonal, honeycomb-shaped cavity (3), and having the tip (4) of the honeycomb formed in this way pointing in the longitudinal direction (A) the pre-form (1) is rolled around the said axis.

3. A sheet-like pre-form according to Claims 1 and 2, **characterized in that** the pre-form (1) is rolled transversely to the longitudinal direction (A) and is optionally combined to form a multiple-layer structure with the same or a different rolling direction.

4. A sheet-like pre-form according to Claims 1 to 3, **characterized in that** smaller units of pre-forms (1) are secured in frames and these are interchangeable.

5. A sheet-like pre-form according to Claims 1 to 3, **characterized in that** larger units with adjacent pre-forms (1) are connected by the welding, soldering, adhesion or clamping of the outer lateral webs (2a) and form a continuous unit.

6. A sheet-like pre-form according to Claims 1 and 2, **characterized in that** after the rolling procedure the pre-form (1), cut into pieces, rolled cylindrically, twisted or turned over at the ends, [is] rolled into cylindrical shaped bodies, [which] act as filling bodies.

## Revendications

1. Pièce de forme plate destinée à servir de corps de remplissage ou de support pour des catalyseurs, des corps de condensation, des filtres ou des éléments similaires, comportant une pluralité de corps de forme constitués de barrettes de liaison, se présentant comme du nid d'abeille continu, obtenue par allongement d'une bande de feuille mince présentant des découpes du genre de perforations décalées transversalement à l'axe longitudinal, qui peut être mise en place dans une surface de section transversale susceptible d'être définie à l'avance, par exemple dans une partie tubulaire parcourue par un fluide, la pièce de forme étant enroulée transversalement à l'axe longitudinal ou le long de celui-ci, en formant plusieurs couches, l'enroulement étant cylindrique ou oval ou analogue, ou bien elle est disposée en étant comprimée, en formant des couches planes disposées par strates aussi bien dans le sens longitudinal que dans le sens transversal en formant un ensemble, les barrettes de liaison se présentant selon des angles et/ou des plans, choisis à volonté, par rapport à la direction de l'écoulement, et les couches individuelles sont fixées sous précontraintes, **caractérisée en ce que** les bords (5) présentent la même réduction de longueur provoquée par la hauteur des dents du dispositif de transport, qui correspond à la variation de longueur causée par l'allongement de la bande de feuille mince pour obtenir la pièce de forme (1).

2. Pièce de forme plate selon la revendication 1, **caractérisée en ce que** les barrettes de liaison (2) circonscrivent un espace creux (3) hexagonal, en forme de nid d'abeille, et en ce que la pointe (4) du nid d'abeille ainsi formé est enroulée dans le sens longitudinal (A) de la pièce de forme (1) autour de cet axe.

3. Pièce de forme plate selon les revendications 1 et 2, **caractérisée en ce que** la pièce de forme (1) est enroulée transversalement au sens longitudinal (A) et est le cas échéant combinée de manière à former un objet comportant plusieurs couches, enroulées dans le même sens ou dans des sens différents.

4. Pièce de forme plate selon les revendications 1 à 3, **caractérisée en ce que** des ensembles d'assez faible dimension de pièces de forme (1) sont fixés dans des cadres et que ceux-ci peuvent être remplacés.

5. Pièce de forme plate selon les revendications 1 à 3, **caractérisée en ce que** des ensembles d'assez grande dimension de pièces de forme (1) voisines sont reliés par brasure, par soudure, par collage ou par agrafage des barrettes de liaison latérales extérieures (2a) et constituent un ensemble continu.

6. Pièce de forme plate selon la revendication 1 ou 2, **caractérisée en ce que** la pièce de forme (1) est enroulée cylindriquement, en ayant été coupée en tronçons après l'opération d'enroulement, torsadée ou repliée aux extrémités et roulée pour former des corps de forme qui sont cylindriques et qui servent de corps de remplissage.
